# EUROPEAN PATENT APPLICATION

(11) **EP 2 388 283 A1**
(43) Date of publication of application: **23.11.2011**
(21) Application number: 10163171.1
(22) Date of filing: 18.05.2010
(51) Int. Cl.: C08G 18/08, C08G 18/10, C08G 18/12

(54) **Process for adjusting the viscosity of anionic polyurethane dispersions**

(71) Applicant: Bayer MaterialScience AG, 51368 Leverkusen (DE)
(72) Inventor: The designation of the inventor has not yet been filed

(57) **Abstract**

The present invention relates to a process for adjusting the viscosity of anionic polyurethane dispersions and to the use of those dispersions in coating compositions.

## Description

The present invention relates to a process for adjusting the viscosity of anionic polyurethane dispersions and to the use of those dispersions in coating compositions.

Anionic polyurethane dispersions are known in principle. Cosolvent-free, aqueous, anionic polyurethane dispersions, processes for their preparation and their use as coatings, coating compositions, adhesives and strippable coatings are also known in the prior art. The relevant prior art in this connection is acknowledged in DE-A 19 653 585.

The preparation of polyurethane dispersions is carried out, for example, by the prepolymer mixing process, the acetone process or the melt dispersion process. The desired viscosity of the polyurethane dispersions thus obtained can be adjusted after chain extension by the addition of solvents such as water or organic solvents. However, the addition of solvents reduces the solids content of the dispersion. Dispersions having a low solids content are undesirable, however, because their preparation and transportation give rise to high costs. Also, it is not possible to achieve the desired layer thickness on application.

Accordingly, it was an object of the present invention to provide a process for reducing the viscosity of anionic polyurethane dispersions which does not require a reduction, or a substantial reduction, in the solids content of the dispersion.

It has now been found, surprisingly, that the viscosity of anionic polyurethane dispersions can be reduced after chain extension by the addition of acids, for example organic acids such as acetic acid.

The present invention therefore provides a process for adjusting the viscosity of an anionically hydrophilized polyurethane dispersion, wherein, after addition of acids to an anionic polyurethane dispersion and stirring of the resulting mixture, there is obtained an anionic polyurethane dispersion having a flow time in the range from 1 to 100 seconds measured according to AFAM 2008-10503 at 23 °C using a DIN 4 mm beaker.

The addition of the acid takes place after the chain extension of a polyurethane prepolymer to a polyurethane polymer. The acid can be added either after or before the dispersion, or even together with the dispersing water. The acid can be added either in concentrated form or in dilute form.

The aqueous anionic polyurethane dispersions comprise a polymer composed of
a) polyvalent isocyanates having from 4 to 30 carbon atoms,
b) diols, of which
   1. from 10 to 100 mol %, based on the total amount of diols (b), have a molecular weight of from 500 to 5000, and
   2. from 0 to 90 mol %, based on the total amount of diols (b), have a molecular weight of from 62 to 500 g/mol,
c) optionally further polyvalent compounds, other than the diols (b), having reactive groups, which are alcoholic hydroxyl groups or primary or secondary amino groups, and
d) monomers other than the monomers (a), (b) and (c) having at least one isocyanate group or at least one group reactive towards isocyanate groups, which additionally carry at least one hydrophilic group or a potentially hydrophilic group, whereby the dispersibility of the polyurethanes in water is achieved,
   to a polyurethane.

The polyisocyanates conventionally used in polyurethane chemistry come into consideration as monomers (a).

Particular mention may be made of diisocyanates X(NCO)₂, wherein X represents an aliphatic hydrocarbon radical having from 4 to 12 carbon atoms, a cycloaliphatic or aromatic hydrocarbon radical having from 6 to 15 carbon atoms or an araliphatic hydrocarbon radical having from 7 to 15 carbon atoms. Examples of such diisocyanates are tetramethylene diisocyanate, hexamethylene diisocyanate, dodecamethylene diisocyanate, 1,4-diiso-cyanatocyclohexane, 1-isocyanato-3,5,5-trimethyl-5-isocyanatomethylcyclohexane (IPDI), 2,2-bis-(4-isocyanatocyclohexyl)-propane, trimethylhexane diisocyanate, 1,4-diiso-cyanatobenzene, 2,4-diisocyanatotoluene, 2,6-diisocyanatotoluene, 4,4'-diisocyanato-diphenylmethane, 2,4-diisocyanato-diphenylmethane, p-xylylene diisocyanate, m- and p-α,α,α',α'-tetramethylxylylene diisocyanate (TMXDI), the isomers of bis-(4-isocyanatocyclohexyl)methane, such as the trans/trans-, the cis/cis- and the cis/trans-isomer, and mixtures of those compounds.

It is also possible to use as compounds (a) isocyanates that carry further masked isocyanate groups, for example uretdione or urethane groups, in addition to the free isocyanate groups.

Where appropriate, isocyanates that carry only one isocyanate group can also be used concomitantly. In general, the amount thereof is not more than 10 mol %, based on the total molar amount of monomers. The monoisocyanates conventionally carry further functional groups, such as olefinic groups or carbonyl groups, and serve to introduce functional groups into the polyurethane, which permit dispersion or crosslinking or further polymer-analogous reaction of the polyurethane. Monomers such as isopropenyl-α,α-dimethylbenzyl isocyanate (TMI) come into consideration for that purpose.

In order to prepare polyurethanes having a specific degree of branching or crosslinking, trivalent and tetravalent isocyanates, for example, can be used. Such isocyanates can be obtained by reacting divalent isocyanates with one another by derivatizing some of their isocyanate groups to allophanate or isocyanurate groups. Commercially available compounds are, for example, the isocyanurate of hexamethylene diisocyanate.

With regard to good film formation and elasticity, possible diols (b) are predominantly higher molecular weight diols (b1), which have a molecular weight of approximately from 500 to 5000 g/mol, preferably of approximately from 1000 to 3000 g/mol.

The diols (b1) are in particular polyester polyols, which are known, for example, from Ullmanns Enzyklopädie der technischen Chemie, 4th Edition, Volume 19, p. 62 to 65. Preference is given to the use of polyester polyols obtained by reaction of dihydric alcohols with divalent carboxylic acids. Instead of the free polycarboxylic acids, the corresponding polycarboxylic anhydrides or corresponding polycarboxylic acid esters of lower alcohols or mixtures thereof can also be used for the preparation of the polyester polyols. The polycarboxylic acids can be aliphatic, cycloaliphatic, araliphatic, aromatic or heterocyclic and can optionally be substituted, for example by halogen atoms, and/or unsaturated. Examples include: suberic acid, azelaic acid, phthalic acid, isophthalic acid, phthalic anhydride, tetrahydrophthalic anhydride, hexahydrophthalic anhydride, tetrachlorophthalic anhydride, endomethylenetetrahydrophthalic anhydride, glutaric anhydride, maleic acid, maleic anhydride, fumaric acid, dimer fatty acids. Preference is given to dicarboxylic acids of the general formula HOOC-(CH₂)_{y}-COOH, wherein y is a number from 1 to 20, preferably an even number from 2 to 20, for example succinic acid, adipic acid, dodecanedicarboxylic acid and sebacic acid.

Other possible polyhydric alcohols include, for example, ethylene glycol, 1,2-propanediol, 1,3-propanediol, 1,3-butanediol, 1,4-butenediol, 1,4-butynediol, 1,5-pentanediol, neopentyl glycol, bis-(hydroxymethyl)-cyclohexanes, such as 1,4-bis-(hydroxymethyl)cyclohexane, 2-methyl-1,3-propanediol, also diethylene glycol, triethylene glycol, tetraethylene glycol, polyethylene glycol, dipropylene glycol, polypropylene glycol, dibutylene glycol and polybutylene glycols. Preference is given to alcohols of the general formula HO-(CH₂)ₓ-OH, wherein x is a number from 1 to 20, preferably an even number from 2 to 20. Examples thereof are ethylene glycol, 1,4-butanediol, 1,6-hexanediol, 1,8-octanediol and 1,12-dodecanediol.

Polycarbonate diols also come into consideration, of the sort that can be obtained, for example, by reaction of phosgene with an excess of the low molecular weight alcohols used as chain extension components for the polyester polyols.

Also suitable are lactone-based polyester diols, which are homopolymers or mixed polymers of lactones, preferably addition products, having terminal hydroxyl groups, of lactones with suitable difunctional starter molecules. There come into consideration as lactones preferably those which are derived from hydroxycarboxylic acids of the general formula HO-(CH₂)_{z}-COOH, wherein z is a number from 1 to 20, preferably an odd number from 3 to 19, for example epsilon-caprolactone, β-propiolactone, gamma-butyrolactone and/or methyl-epsilon-caprolactone and mixtures thereof. Suitable starter components are, for example, the low molecular weight dihydric alcohols mentioned above as chain extension components for the polyester polyols. The corresponding polymers of epsilon-caprolactone are particularly preferred. Lower polyester diols or polyether diols can also be used as starters for the preparation of the lactone polymers.

Instead of the polymers of lactones it is also possible to use the corresponding chemically equivalent polycondensation products of the hydroxycarboxylic acids corresponding to the lactones.

Polyether diols also come into consideration as monomers (b1). They are obtainable in particular by polymerization of ethylene oxide, propylene oxide, butylene oxide, tetrahydrofuran, styrene oxide or epichlorohydrin with itself, for example in the presence of BF₃, or by addition of those compounds, optionally in admixture or in succession, to starter components having reactive hydrogen atoms, such as alcohols or amines, for example water, ethylene glycol, 1,2-propanediol, 1,3-propanediol, 2,2-bis(4-hydroxyphenyl)-propane or aniline. Particular preference is given to polytetrahydrofuran having a molecular weight of from 2000 to 5000 and especially from 3500 to 4500.

The polyester diols and polyether diols can also be used in the form of mixtures.

The hardness and the modulus of elasticity of the polyurethanes can be increased if low molecular weight diols (b2) having a molecular weight of approximately from 50 to 500 g/mol, preferably from 60 to 200 g/mol, are also used as diols (b) in addition to the diols (b1).

The chain extension components of the short-chained alkanediols mentioned for the preparation of polyester polyols are used in particular as monomers (b2), preference being given to unbranched diols having from 2 to 12 carbon atoms and an even number of carbon atoms as well as 1,5-pentanediol and neopentyl glycol.

Preferably, the amount of diols (b1), based on the total amount of diols (b), is from 10 to 100 mol % and the amount of monomers (b2), based on the total amount of diols (b), is from 0 to 90 mol %. Particularly preferably, the ratio of the diols (b1) to the monomers (b2) is from 0.2:1 to 5:1, particularly preferably from 0.5:1 to 2:1.

The monomers (c), which are different from the diols (b), are generally used for crosslinking or chain extension. They are generally more than dihydric, non-aromatic alcohols, amines having 2 or more primary and/or secondary amino groups, as well as compounds which carry one or more primary and/or secondary amino groups in addition to one or more alcoholic hydroxyl groups.

Alcohols that are more than dihydric, which can be used to establish a specific degree of branching or crosslinking include trimethylolpropane, glycerol and sugars.

Monoalcohols also come into consideration which, as well as carrying the hydroxyl group, carry a further isocyanate-reactive group, such as monoalcohols having one or more primary and/or secondary amino groups, for example monoethanolamine.

Polyamines having 2 or more primary and/or secondary amino groups are used especially when the chain extension or crosslinking is to take place in the presence of water, because amines generally react more quickly with isocyanates than do alcohols or water. This is often necessary when aqueous dispersions of crosslinked polyurethanes or polyurethanes having a high molecular weight are desired. In such cases, the procedure is such that prepolymers having isocyanate groups are prepared and rapidly dispersed in water, and then chain extension or crosslinking is carried out by addition of compounds having a plurality of isocyanate-reactive amino groups.

Amines suitable for that purpose are generally polyfunctional amines having a molecular weight in the range from 32 to 500 g/mol, preferably from 32 to 300 g/mol, which contain at least two primary, two secondary or one primary and one secondary amino group(s). Examples thereof are diamines, such as ethylenediamine, diethanolamine, diaminopropane, diaminobutane, diaminohexane, piperazine, 2,5-dimethylpiperazine, amino-3-aminomethyl-3,5,5-trimethyl-cyclohexane (isophoronediamine, IPDA), 4,4'-diaminodicyclohexylmethane, 1,4-diaminocyclohexane, aminoethylethanolamine, hydrazine, hydrazine hydrate, or triamines, such as diethylenetriamine or 1,8-diamino-4-aminomethyloctane.

The amines can also be used in blocked form, for example in the form of the corresponding ketimines (see e.g. CA-1 129 128), ketazines (see e.g. US-A 4 269 748) or amine salts (see US-A 4 292 226). Oxazolidines, as are used, for example, in US-A 4 192 937, also represent masked polyamines which can be used for the chain extension of the prepolymers in the preparation of the polyurethanes according to the invention. When such masked polyamines are used, they are generally mixed with the prepolymers in the absence of water, and the mixture is then mixed with the dispersing water or part of the dispersing water so that the corresponding polyamines are freed by hydrolysis.

The polyurethanes preferably do not contain polyamine or contain from 1 to 10 mol %, particularly preferably from 4 to 8 mol %, based on the total amount of components (b) and (c), of a polyamine having at least 2 isocyanate-reactive amino groups as monomers (c).

For chain termination it is also possible to use monoalcohols in subordinate amounts, that is to say preferably in amounts of less than 10 mol %, based on components (b) and (c). Their function is generally similar to that of the monoisocyanates, that is to say they serve mainly to functionalize the polyurethane. Examples are esters of acrylic or methacrylic acid, such as hydroxyethyl acrylate or hydroxyethyl methacrylate.

In order to achieve the water dispersibility of the polyurethanes, the polyurethanes contain, in addition to components (a), (b) and (c), monomers (d) other than components (a), (b) and (c), which monomers (d) carry at least one isocyanate group or at least one group that is reactive towards isocyanate groups and, in addition, at least one hydrophilic group or a group that can be converted into hydrophilic groups. In the following text, the expression "hydrophilic groups or potentially hydrophilic groups" is shortened to "(potentially) hydrophilic groups". The (potentially) hydrophilic groups react with isocyanates substantially more slowly than do the functional groups of the monomers that serve to synthesize the main polymer chain. The (potentially) hydrophilic groups can be non-ionic or, preferably, ionic hydrophilic groups or potentially ionic hydrophilic groups.

The amount of components having (potentially) hydrophilic groups in the total molar amount of (potentially) hydrophilic groups, based on the amount by weight of all monomers (a) to (b), is from 30 to 1000, preferably from 50 to 500 and particularly preferably from 80 to 300 mmol/kg.

There come into consideration as non-ionic hydrophilic groups in particular polyethylene glycol ethers with especially from 5 to 100, preferably from 10 to 80, ethylene oxide repeating units. The content of polyethylene oxide units is generally from 0 to 10 % by weight, preferably from 0 to 6 % by weight, based on the amount by weight of all the monomers (a) to (d).

Preferred monomers having non-ionic hydrophilic groups are polyethylene glycol and diisocyanates carrying a terminally etherified polyethylene glycol radical. Such diisocyanates and processes for their preparation are described in patent specifications US 3 905 929 and US 3 920 598.

Ionic hydrophilic groups are especially anionic groups such as the sulfonate, carboxylate and phosphate group in the form of their alkali metal or ammonium salts, as well as cationic groups such as ammonium groups, in particular protonated tertiary amino groups or quaternary ammonium groups.

Potentially ionic hydrophilic groups are especially those which can be converted into the above-mentioned ionic hydrophilic groups by simple neutralization, hydrolysis or quaternization reactions, that is to say, for example, carboxylic acid groups, anhydride groups or tertiary amino groups.

Ionic monomers (d) or potentially ionic monomers (d) are described in detail, for example, in Ullmanns Encyklopädie der technischen Chemie, 4th Edition, Volume 19, p. 311-313 and, for example, in DE-A 14 95 745.

Aliphatic, cycloaliphatic, araliphatic or aromatic mono- and di-hydroxycarboxylic acids that carry at least one alcoholic hydroxyl group or a primary or secondary amino group are usually used as monomers (d). Preference is given to dihydroxyalkylcarboxylic acids, especially having from 3 to 10 carbon atoms, as are also described in US-A 3 412 054. Particular preference is given to compounds of the general formula in which R¹ and R² represent a C₁- to C₄-alkanediyl unit and R³ represents a C₁- to C₄-alkyl unit, and especially to dimethylpropionic acid (DMPA).

Also suitable are corresponding dihydroxysulfonic acids and dihydroxyphosphonic acids, such as 2,3-dihydroxypropanephosphonic acid.

There are also suitable dihydroxy compounds having a molecular weight from above 500 to 10,000 g/mol and having at least 2 carboxylate groups, which are known from DE-A41 40486. They are obtainable by reaction of dihydroxy compounds with tetracarboxylic dianhydrides, such as pyromellitic dianhydride or cyclopentanetetracarboxylic dianhydride, in a molar ratio of from 2:1 to 1.05:1 in a polyaddition reaction. Suitable dihydroxy compounds are in particular the monomers (b2) mentioned as chain extenders and also the diols (b1).

There come into consideration as monomers (d) having isocyanate-reactive amino groups aminocarboxylic acids, such as lysine, β-alanine, the adducts, mentioned in DE-A 20 34 479, of aliphatic diprimary diamines with α,β-unsaturated carboxylic acids and sulfonic acids. Such compounds have, for example, the general formula I H₂N-R-NH-R'-X (I), in which R and R' independently of one another represent a C₁- to C₆-alkanediyl unit, preferably ethylene, and X represents COOH or SO₃H. Particularly preferred compounds of formula I are N-(2-aminoethyl)-2-aminoethanecarboxylic acid and N-(2-aminoethyl)-2-aminoethanesulfonic acid or the corresponding alkali salts, wherein Na is particularly preferred as the counter-ion.

If monomers having potentially ionic groups are used, the conversion thereof into the ionic form can take place before, during, but preferably after the isocyanate polyaddition, because the ionic monomers are frequently only sparingly soluble in the reaction mixture. The carboxylate groups are particularly preferably in the form of their salts with an alkali ion or an ammonium ion as counter-ion.

The monomers (d) and the amounts thereof are so chosen that the overall nature of the resulting polyurethane dispersions is anionic.

It is generally known in the field of polyurethane chemistry how the molecular weight of the polyurethanes can be adjusted by choosing the amounts of the mutually reactive monomers and the arithmetic mean of the number of reactive functional groups per molecule.

Normally, components (a), (b), (c) and (d) and the respective molar amounts thereof are so chosen that the ratio A:B of
A) the molar amount of isocyanate groups and
B) the sum of the molar amount of hydroxyl groups and the molar amount of functional groups that are able to react with isocyanates in an addition reaction
is from 0.5 : 1 to 2 : 1, preferably from 0.8 : 1 to 1.5, particularly preferably from 0.9 : 1 to 1.2 : 1. Most particularly preferably, the ratio A:B is as close to 1:1 as possible.

In addition to components (a), (b), (c) and (d), monomers having only one reactive group are used generally in amounts of up to 15 mol %, preferably up to 8 mol %, based on the total amount of components (a), (b), (c) and (d).

The polyaddition of components (a) to (d) is generally carried out at reaction temperatures of from 20 to 180 °C, preferably from 50 to 150 °C.

The required reaction times can extend from a few minutes to several hours. It is known in the field of polyurethane chemistry how the reaction time is affected by a large number of parameters such as temperature, concentration of the monomers and reactivity of the monomers.

In order to accelerate the reaction of the diisocyanates, conventional catalysts, such as dibutyltin dilaurate, tin(II) octoate or diazabicyclo-(2,2,2)-octane, can be used concomitantly.

Stirrer vessels come into consideration as polymerization apparatuses, in particular when a low viscosity and good heat dissipation are ensured by the concomitant use of solvents.

If the reaction is carried out without a solvent, extruders, in particular self-cleaning multi-screw extruders, are particularly suitable owing to the mostly high viscosities and the mostly only short reaction times.

In most cases, the dispersions are prepared by one of the following processes: According to the "acetone process", an anionic polyurethane is prepared from components (a) to (d) in a solvent that is miscible with water and boils at 100 °C under normal pressure. Sufficient water is added to form a dispersion in which water constitutes the continuous phase.

The "prepolymer mixing process" differs from the acetone process in that, instead of a fully reacted (potentially) anionic polyurethane, a prepolymer carrying isocyanate groups is first prepared. Components (a) to (d) are so chosen that the ratio A : B as defined is from greater than 1.0 to 3, preferably from 1.05 to 1.5. The prepolymer is first dispersed in water and then crosslinked by reaction of the isocyanate groups with amines carrying more than 2 isocyanate-reactive amino groups or chain-extended with amines carrying 2 isocyanate-reactive amino groups. Chain extension also takes place when no amine is added. In that case, isocyanate groups are hydrolyzed to amine groups, which react with any remaining isocyanate groups of the prepolymers with chain extension.

If a solvent was used concomitantly in the preparation of polyurethane, the majority of the solvent is usually removed from the dispersion, for example by distillation under reduced pressure. The dispersions preferably have a solvent content of less than 10 % by weight and are particularly preferably free of solvents.

According to the process according to the invention, acid is added to an anionic polyurethane dispersion in a weight ratio preferably in the range from 0.1 to 100,000, particularly preferably in the range from 1 to 10,000, most particularly preferably in the range from 10 to 5000 ppm, based on the weight of the polyurethane polymer in the dispersion.

The acids can be either inorganic or organic. Examples of inorganic acids are sulfuric acid, phosphoric acid, hydrochloric acid or mixtures thereof. Examples of organic acids are formic acid, acetic acid, propionic acid, butyric acid or higher homologues, but lactic acid, DMPA or higher-valent acids, such as, for example, citric acid or adipic acid or mixtures thereof, can also be used. It is also possible to use mixtures of inorganic and organic acids. Organic acids are preferably used, however. Acetic acid is particularly preferably used.

The adjustment of the viscosity can be carried out with either concentrated or dilute acetic acid. The acetic acid is preferably added in the form of a 50 % by weight in water.

Polyurethane polyurea dispersions obtained by the process according to the invention preferably have a solids content in the range from 20 to 60 % by weight, particularly preferably in the range from 30 to 40 % by weight, in water.

The polyurethane dispersion prepared according to the invention contains particles having a mean particle diameter preferably in the range from 20 to 1000 nm, particularly preferably in the range from 50 to 800 nm, most particularly preferably in the range from 50 to 400 nm, measured by the dynamic light scattering method according to ISO 13320-1.

The pH values of the white, storage-stable polyurethane polyurea dispersions prepared according to the invention are in the range from 6 to 9.

For the preparation of coating compositions, the polyurethane dispersions according to the invention are used either on their own or in combination with other aqueous binders.

Such aqueous binders can be composed, for example, of polyester, polyacrylate, polyepoxide or polyurethane polymers. Combination with radiation-curable aqueous binders is also possible. It is further possible to polymerize polymerizable, vinylically unsaturated monomers in the presence of the polyurethane dispersions according to the invention in order to obtain hybrid dispersions. To that end, the emulsion polymerization of olefinically unsaturated monomers such as esters and/or amides of (meth)acrylic acid and alcohols having from 1 to 18 carbon atoms, styrene, vinyl esters or butadiene is carried out in the presence of the polyurethane dispersion. The monomers can contain functional groups, such as hydroxyl or acetoacetoxy groups, as well as one or more olefinic double bonds.

Accordingly, the present invention also provides physically drying coating compositions comprising the polyurethane dispersions according to the invention.

It is further possible to add crosslinkers prior to application of the coating composition comprising the polyurethane dispersion according to the invention. Hydrophilic and hydrophobic polyisocyanate crosslinkers having free NCO groups are preferably suitable for that purpose.

The polyurethane dispersions prepared according to the invention are preferably used as binders in coating compositions. Coatings based on the polyurethane dispersions according to the invention can be applied to any desired substrates, for example wood, metal, plastics, paper, leather, textiles, felt, glass or mineral substrates, as well as to substrates that are already coated. A particularly preferred application is the coating of wood floors, plastics floors and mineral floors.

The present invention also provides for the use of the polyurethane dispersions according to the invention in the production of clear coatings, pigmented or non-pigmented coatings. Suitable substrates are mineral or ceramic substrates and materials, concrete, hard-fiber materials, metal substrates, plastics, paper, cardboard, composite materials, glass, porcelain, textiles and/or leather. Preferred substrates are wooden and wood-like substrates, such as, for example, furniture, wood fiberboard, parquet, window frames, doors, panels, boards or beams.

### Examples

- PE 225B: Polyester based on butanediol and adipic acid having a number-average molecular weight of 2250 Da. Product of Bayer MaterialScience AG
- DE 3600: Polyether having a number-average molecular weight of 2000 Da. Product of Bayer MaterialScience AG
- LB 25: Polyethylene glycol monomethyl ether having a number-average molecular weight of 2250 Da. Product of Bayer MaterialScience AG
- DMPS: Dimethylolpropionic acid
- IPDI: Desmodur® I, a product of Bayer MaterialScience AG
- EDI PA: N-ethyl-diisopropylamine
- EDA: Ethylenediamine, 69 % solution in water
- DEA: Diethanolamine

### The following measuring methods were used:

SC (solids content): The method according to DIN EN ISO 3251 was used to determine the solids content. To that end, 1 g of the dispersion was heated for 1 hour at 125 °C in a circulating air oven and the residue was then measured.
Flow time: The method according to AFAM 2008-10503 was used. The measurement was carried out at 23 °C from a DIN 4 mm beaker.
The pH value was measured according to DIN ISO 976.
MPS (mean particle size): The mean particle size was measured by laser correlation spectroscopy.

### Example 1 (comparison)

1.35 kg of PE 225B, 0.80 kg of DE 3600, 80 g of DMPS and 0.13 kg of LB 25 were weighed into a 10-litre flask and homogenized at 100 rpm for 30 minutes at a temperature of 70 °C. 0.65 kg of IPDI was then added at that temperature, and the mixture was stirred for 6 hours at a temperature of 90 °C until an NCO value of 3.36 % was reached. The mixture was then neutralized with 73 g of EDIPA and stirred for 10 minutes. The prepolymer was then dispersed in 4 kg of water, stirred for a further 2 minutes and then extended with a mixture of 0.26 kg of water containing 5 g of DEA and 60 g of EDA. The resulting dispersion had the following characteristic values:
SC: 38.4 %
Flow time: could not be measured
MPS: 189 nm
pH 8.3

### Example 2

A mixture of 2 g of acetic acid in 2 g of water (270 ppm) was added to the dispersion described in Example 1. The resulting dispersion had the following properties:
SC: 38.2 %
Flow time: 49 s
MPS: 191 nm
pH: 8.0

Of course, dispersions that are too viscous, such as the dispersion obtained in Example 1, cannot be processed for application. Measurement of a flow time of 49 seconds in Example 2 therefore shows that the addition of a small amount of organic acids brings about a considerable reduction in the viscosity.

## Claims

1. Process for adjusting the viscosity of an anionically hydrophilized polyurethane dispersion, **characterized in that**, after addition of acid to an anionic polyurethane dispersion and stirring of the resulting mixture, there is obtained an anionic polyurethane dispersion having a flow time in the range from 1 to 100 seconds measured according to AFAM 2008-10503 at 23 °C using a DIN 4 mm beaker.

2. Process according to claim 1, **characterized in that** the acid is added in a weight ratio in the range from 1 to 10,000, based on the weight of the polyurethane polymer in the dispersion.

3. Process according to claim 1, **characterized in that** the acid is added before, after or during the dispersion.

4. Process according to claim 1, **characterized in that** the added acid is organic.

5. Process according to claim 4, **characterized in that** the acid is a monofunctional acid from the group consisting of formic acid, acetic acid, propionic acid, butyric acid or mixtures thereof.

6. Process according to claim 1, **characterized in that** the anionic polyurethane dispersion has a solids content in the range from 20 to 60 % by weight in water.

7. Process according to claim 1, **characterized in that** the anionic polyurethane dispersion comprises a polyurethane polymer composed of
a) polyvalent isocyanates having from 4 to 30 carbon atoms,
b) diols, of which
1) from 10 to 100 mol %, based on the total amount of diols (b), have a molecular weight of from 500 to 5000, and
2) from 0 to 90 mol %, based on the total amount of diols (b), have a molecular weight of from 62 to 500 g/mol,
c) optionally further polyvalent compounds, other than the diols (b), having reactive groups, which are alcoholic hydroxyl groups or primary or secondary amino groups, and
d) monomers, other than the monomers (a), (b) and (c), having at least one isocyanate group or at least one group reactive towards isocyanate groups, which additionally carry at least one hydrophilic group or a potentially hydrophilic group.

8. Aqueous dispersions obtainable by a process according to any one of claims 1 to 7.

9. Coating composition comprising an aqueous dispersion according to claim 8 or obtainable by a process according to claims 1 to 7.

10. Use of an aqueous dispersion according to claim 8 in the coating of wood, metal, plastics, paper, leather, textiles, felt, glass or mineral substrates.
